# EUROPEAN PATENT APPLICATION

(11) **EP 4 852 311 A1**
(43) Date of publication of application: **09.12.2026**
(21) Application number: 25227538.3
(22) Date of filing: 30.12.2025
(51) Int. Cl.: H02S 20/10, F24S 30/40, H02S 20/32

(54) **FLEXIBLE PHOTOVOLTAIC SUPPORT ARRAY AND FLEXIBLE PHOTOVOLTAIC SYSTEM**

(30) Priority: 05.06.2025 CN 202521136272 U
(71) Applicant: Arctech Solar Holding Co., Ltd., Kunshan Suzhou, Jiangsu 215331 (CN)
(72) Inventor: YANG, Ying, Kunshan, 215331 (CN); PENG, Yinghai, Kunshan, 215331 (CN); LIU, Haijun, Kunshan, 215331 (CN)
(74) Representative: Michalski Hüttermann & Partner mbB

(57) **Abstract**

A flexible photovoltaic support array (10) includes a number of rows of flexible photovoltaic supports (1) and a wind resistance mechanism (2). Each row of flexible photovoltaic supports includes a number of columns (11), a number of beams (12), a number of cable structures (13) and a support bracket (14). At least two rows of flexible photovoltaic supports include a first flexible photovoltaic support (1A) and a second flexible photovoltaic support (1B) adjacent to each other. The support bracket includes a first support bracket (14A) and a second support bracket (14B). The wind resistance mechanism includes a telescopic rod (21) and a damper (22). The telescopic rod includes a first rod (211) and a second rod (212). The first rod and the second rod are pivotally connected to the first flexible photovoltaic support and the second flexible photovoltaic support, respectively. A flexible photovoltaic system having the flexible photovoltaic support array is also disclosed.

## Description

### CROSS-REFERENCE TO RELATED APPLICATION

This patent application claims priority of a Chinese Patent Application No. 202521136272.4, filed on June 5, 2025 and titled "FLEXIBLE PHOTOVOLTAIC SUPPORT ARRAY AND FLEXIBLE PHOTOVOLTAIC SYSTEM".

### TECHNICAL FIELD

The present invention relates to the field of photovoltaics, and more particularly, to a flexible photovoltaic support array and a flexible photovoltaic system.

### BACKGROUND

Since flexible photovoltaic supports mount photovoltaic panels on steel cables, which are anchored at two ends to beams atop columns, the harsh conditions at project sites can pose challenges. When a plurality of rows of flexible photovoltaic tracking supports are installed, a single row often has limited wind resistance, leading to twisting, vertical shaking, or swaying of the cable structure. As a result, the photovoltaic panels attached to the cables may suffer damage, affecting power generation efficiency.

Therefore, it is necessary to provide a flexible photovoltaic support array and a flexible photovoltaic system to address these issues.

### SUMMARY

An object of the present invention is to provide a flexible photovoltaic support array and a flexible photovoltaic system to enhance the wind resistance performance of the flexible photovoltaic support array.

To achieve the above object, the present invention adopts the following technical solution:
a flexible photovoltaic support array, including:
at least two rows of flexible photovoltaic supports, each row of the flexible photovoltaic support including a plurality of columns arranged at intervals, a plurality of beams each disposed at a top of each of the columns, a plurality of cable structures each connected between the beams of two columns, and a support bracket connected to the cable structure; wherein the at least two rows of the flexible photovoltaic supports include a first flexible photovoltaic support and a second flexible photovoltaic support which are disposed adjacent to each other; the support bracket includes a first support bracket provided on the first flexible photovoltaic support and a second support bracket provided on the second flexible photovoltaic support; and
a wind resistance mechanism, the wind resistance mechanism including a telescopic rod and a damper; wherein the telescopic rod includes a first rod and a second rod which are slidably fitted along a telescoping direction of the telescopic rod; the first rod is pivotally connected to the first flexible photovoltaic support; the second rod is pivotally connected to the second flexible photovoltaic support; one end of the damper is pivotally connected to the first flexible photovoltaic support, and another end of the damper is pivotally connected to the first rod or the second rod.

Furthermore, a pivotal connection point of the first rod to the first flexible photovoltaic support, a pivotal connection point of the one end of the damper to the first flexible photovoltaic support, and a pivotal connection point of the another end of the damper to the first rod or the second rod form three vertices of a triangle.

Furthermore, the first rod is pivotally connected to the first support bracket or the cable structure of the first flexible photovoltaic support; the second rod is pivotally connected to the second support bracket or the cable structure of the second flexible photovoltaic support; the one end of the damper is pivotally connected to the first support bracket or the cable structure of the first flexible photovoltaic support, and the another end of the damper is pivotally connected to the first rod or the second rod.

Furthermore, the first rod includes a first body and a first connecting component; one end of the first connecting component is connected to the first body, and another end of the first connecting component is pivotally connected to the first support bracket; and/or
the second rod includes a second body and a second connecting component; one end of the second connecting component is connected to the second body, and another end of the second connecting component is pivotally connected to the second support bracket.

Furthermore, the wind resistance mechanism further includes a rotating seat disposed on the first body or the second body; the damper includes a damper body and a damper telescopic rod; one end of the damper body is rotatably connected to the rotating seat, and one end of the damper telescopic rod is rotatably connected to the first support bracket.

Furthermore, the rotating seat includes two support plates provided on the first body or the second body that are oppositely arranged, and a first pivot shaft connecting the two support plates; one end of the damper body is mounted on a first pivot shaft via a rod end bearing; and/or
the first support bracket includes a support rod, the support rod includes two fixing plates that are oppositely arranged, and a second pivot shaft connecting the two fixing plates; and one end of the damper telescopic rod is mounted on a second pivot shaft via a rod end bearing.

Furthermore, the first support bracket includes a component cable support rod, a stabilizing cable support rod arranged opposite to the component cable support rod, and a plurality of side support rods connected between the component cable support rod and the stabilizing cable support rod;
the cable structure includes component cables and stabilizing cables; the stabilizing cables are located below the component cables; the component cables are used for fixedly connecting to photovoltaic modules; the component cables include a first component cable and a second component cable which are arranged along a left-right direction; the stabilizing cables include a first stabilizing cable and a second stabilizing cable which are arranged along the left-right direction; the first component cable and the second component cable are fixed by clamps to a first fixing point and a second fixing point of the component cable support rod, respectively; the first stabilizing cable and the second stabilizing cable are fixed by clamps to a third fixing point and a fourth fixing point of the stabilizing cable support rod, respectively; and the first fixing point, the second fixing point, the third fixing point and the fourth fixing point form four vertices of a trapezoid.

Furthermore, a plurality of the first support brackets are provided and arranged at intervals along an extending direction of the cable structure; the plurality of first support brackets include a first central support bracket located in a middle of the cable structure and a plurality of first side support brackets provided on two sides of the first central support bracket along the extending direction of the cable structure; the first central support bracket is connected to the first component cable, the second component cable, the first stabilizing cable and the second stabilizing cable to form a first set of four vertices; the first side support brackets are connected to the first component cable, the second component cable, the first stabilizing cable and the second stabilizing cable to form a second set of four vertices; and an area of a quadrilateral formed by the first set of four vertices is larger than an area of a quadrilateral formed by the second set of four vertices.

Furthermore, a reinforcing rod is provided adjacent to ends of the component cable support rod and the stabilizing cable support rod; and the reinforcing rod, the side support rod adjacent to the reinforcing rod, and the component cable support rod or the stabilizing cable support rod form a triangle.

Furthermore, each row of the flexible photovoltaic support further includes a base disposed at the top of each of the columns, and a driving device mounted on the base; the beam is rotatably disposed on the base; the driving device is disposed between the beam and the base; the driving device includes a power output component; the power output component is connected to the beam; and the driving device is used for driving the beam to rotate, thereby being capable of driving the cable structure and the photovoltaic modules mounted on the cable structure to rotate.

Furthermore, the first support bracket and the second support bracket have a same structure.

To achieve the above object, the present invention adopts the following technical solution:
a flexible photovoltaic system, wherein the flexible photovoltaic system includes the aforementioned flexible photovoltaic support array, the flexible photovoltaic system further includes a plurality of photovoltaic modules each mounted on the cable structure of each row of flexible photovoltaic supports, and the photovoltaic module is mounted on the cable structure via clamping blocks.

Compared to existing technologies, the beneficial effects of the present invention are as follows:
The flexible photovoltaic support array of the present invention includes at least two rows of the flexible photovoltaic supports and the wind resistance mechanism. The wind resistance mechanism includes the telescopic rod and the damper. The telescopic rod includes the first rod and the second rod that slide relative to each other along the telescopic direction of the telescopic rod. The first rod is pivotally connected to the first row of flexible photovoltaic supports. The second rod is pivotally connected to the adjacent second row of flexible photovoltaic supports. One end of the damper is connected to the first row of flexible photovoltaic supports, and another end is pivotally connected to either the first rod or the second rod, enabling the wind resistance mechanism to provide resistance when the first flexible photovoltaic support and the second flexible photovoltaic support move relative to each other. This reduces the swinging, tilting, or twisting of each row of flexible photovoltaic tracking supports, thereby enhancing the wind resistance performance.

When the flexible photovoltaic support array includes the plurality of rows of flexible photovoltaic tracking supports, the telescopic rod and the damper of the wind resistance mechanism are able to adapt to their posture changes, meeting the requirements for real-time angle tracking of the flexible photovoltaic tracking supports and ensuring versatility. Moreover, the damper can provide damping for two adjacent rows of flexible photovoltaic tracking supports, significantly improving their wind resistance performance, especially in high-wind environments.

### BRIEF DESCRIPTION OF DRAWINGS

FIG. 1 is a perspective schematic view of a flexible photovoltaic support array in accordance with an embodiment of the present invention;
FIG. 2 is a perspective schematic view of FIG. 1 from another angle;
FIG. 3 is a partially enlarged schematic view of portion A in FIG. 2;
FIG. 4 is a partially enlarged schematic view of portion B in FIG. 2;
FIG. 5 is a perspective schematic view of a first flexible photovoltaic support, a second flexible photovoltaic support, and a wind resistance mechanism in FIG. 1;
FIG. 6 is a partially enlarged schematic view of portion C in FIG. 5;
FIG. 7 is a partially enlarged schematic view of portion D in FIG. 5;
FIG. 8 is a front view of the wind resistance mechanism, a first support bracket, and a second support bracket in FIG. 1;
FIG. 9 is a perspective schematic view of a support bracket in FIG. 8;
FIG. 10 is an exploded perspective schematic view of the wind resistance mechanism in FIG. 1; and
FIG. 11 is a perspective schematic view of a column, a base, a beam, and a driving device in FIG. 1.

### DETAILED DESCRIPTION

Exemplary embodiments will be described in detail here, examples of which are shown in drawings. When referring to the drawings below, unless otherwise indicated, same numerals in different drawings represent the same or similar elements. The examples described in the following exemplary embodiments do not represent all embodiments consistent with this application. Rather, they are merely examples of devices and methods consistent with some aspects of the application as detailed in the appended claims.

The terminology used in this application is only for the purpose of describing particular embodiments, and is not intended to limit this application. The singular forms "a", "said", and "the" used in this application and the appended claims are also intended to include plural forms unless the context clearly indicates other meanings.

It should be understood that the terms "first", "second" and similar words used in the specification and claims of this application do not represent any order, quantity or importance, but are only used to distinguish different components. Similarly, "an" or "a" and other similar words do not mean a quantity limit, but mean that there is at least one; "multiple" or "a plurality of" means two or more than two. Unless otherwise noted, "front", "rear", "lower" and/or "upper" and similar words are for ease of description only and are not limited to one location or one spatial orientation. Similar words such as "include" or "comprise" mean that elements or objects appear before "include" or "comprise" cover elements or objects listed after "include" or "comprise" and their equivalents, and do not exclude other elements or objects. The term "a plurality of" mentioned in the present invention includes two or more.

Hereinafter, some embodiments of the present invention will be described in detail with reference to the accompanying drawings. In the case of no conflict, the following embodiments and features in the embodiments can be combined with each other.

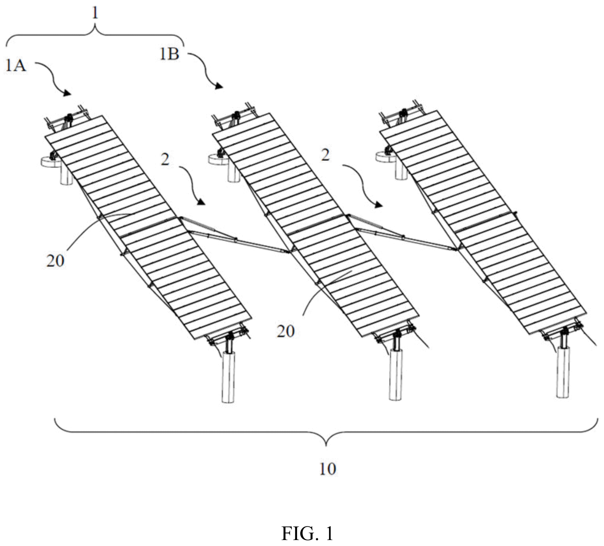

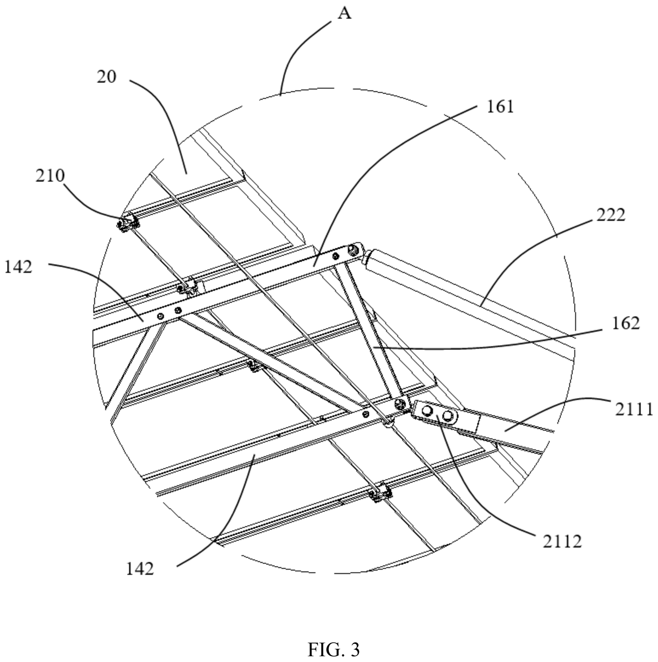

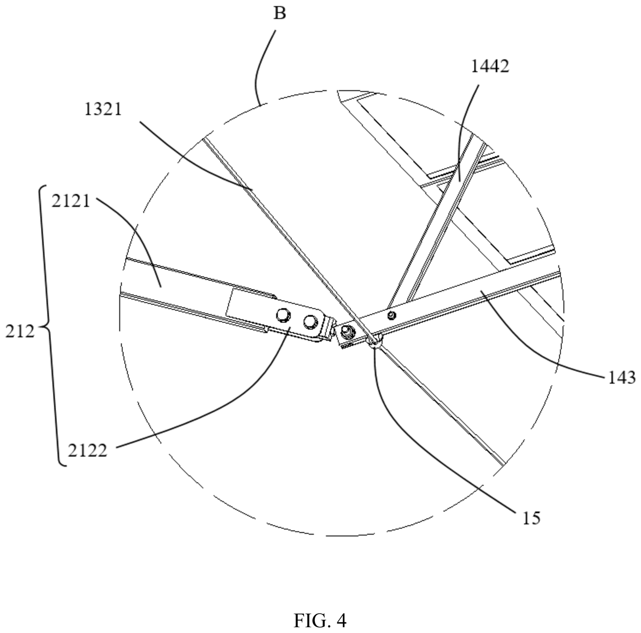

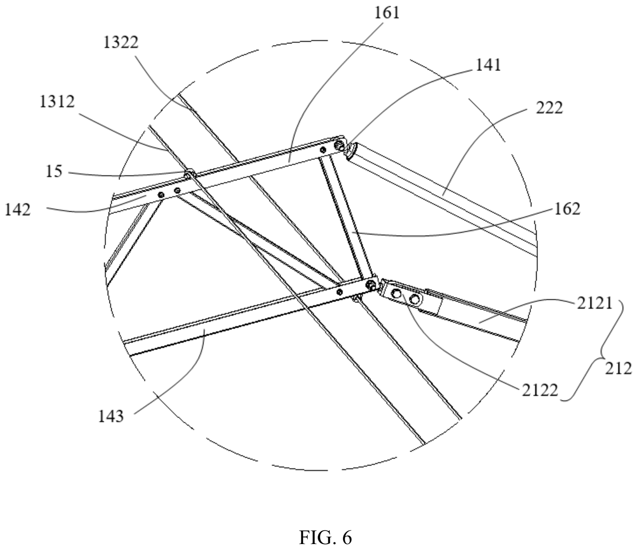

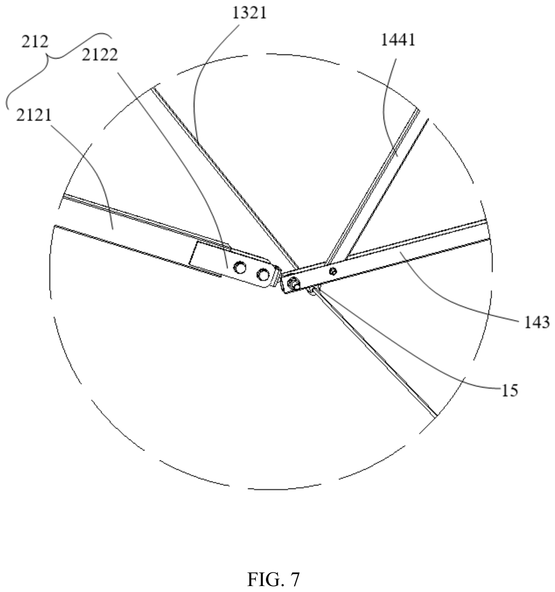

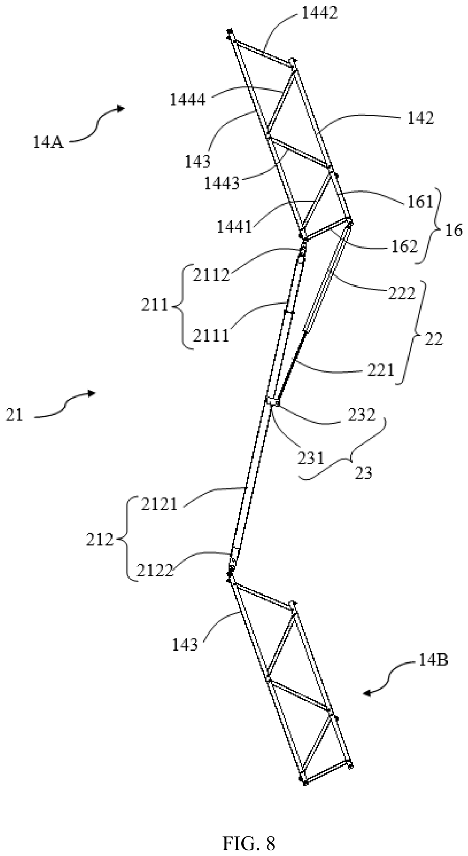

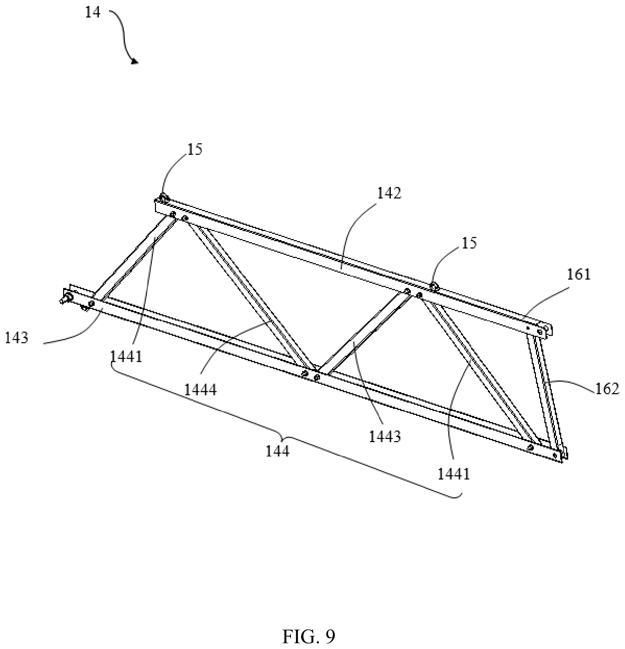

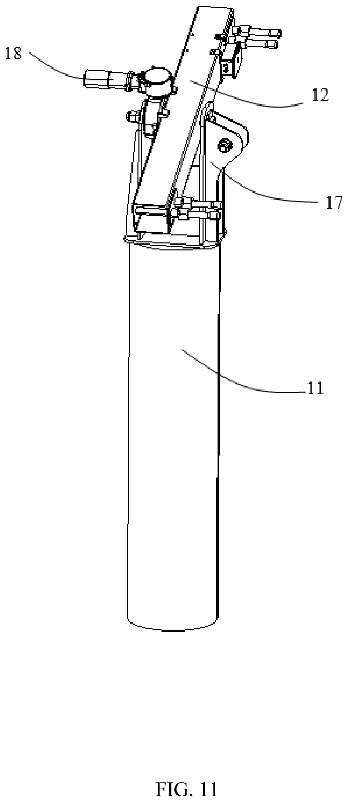

Referring to FIG. 1 to FIG. 11, the present invention discloses a flexible photovoltaic support array 10. The flexible photovoltaic support array 10 includes at least two rows of flexible photovoltaic supports 1, and a wind resistance mechanism 2. Each row of flexible photovoltaic supports 1 includes a plurality of spaced-apart columns 11, a plurality of beams 12 each mounted on top of each column 11, a cable structure 13 connecting two beams 12, and support brackets 14 connected to the cable structure 13. The at least two rows of flexible photovoltaic supports 1 include a first flexible photovoltaic support 1A and a second flexible photovoltaic support 1B which are disposed adjacent to each other. The support brackets 14 include a first support bracket 14A provided on the first flexible photovoltaic support 1A and a second support bracket 14B provided on the second flexible photovoltaic support 1B. The wind resistance mechanism 2 includes a telescopic rod 21 and a damper 22. The telescopic rod 21 includes a first rod 211 and a second rod 212 which are slidably engaged along a telescopic direction of the telescopic rod 21. The first rod 211 is pivotally connected to the first flexible photovoltaic support 1A. The second rod 212 is pivotally connected to the second flexible photovoltaic support 1B. One end of the damper 22 is pivotally connected to the first flexible photovoltaic support 1A, and another end of the damper 22 is pivotally connected to the first rod 211 or the second rod 212. As a result, the wind resistance mechanism 2 can provide resistance when the first flexible photovoltaic support 1A and the second flexible photovoltaic support 1B move relative to each other, reducing swinging, tilting, or twisting of each row of flexible photovoltaic supports 1 and improving the wind resistance performance of the flexible photovoltaic supports 1. In a first embodiment, both the first flexible photovoltaic support 1A and the second flexible photovoltaic support 1B are fixed flexible supports. An angle between the beam 12 on the first flexible photovoltaic support 1A and the second flexible photovoltaic support 1B, and the ground is a fixed value. By incorporating the wind resistance mechanism 2, the wind resistance performance between the first flexible photovoltaic support 1A and the second flexible photovoltaic support 1B is enhanced.

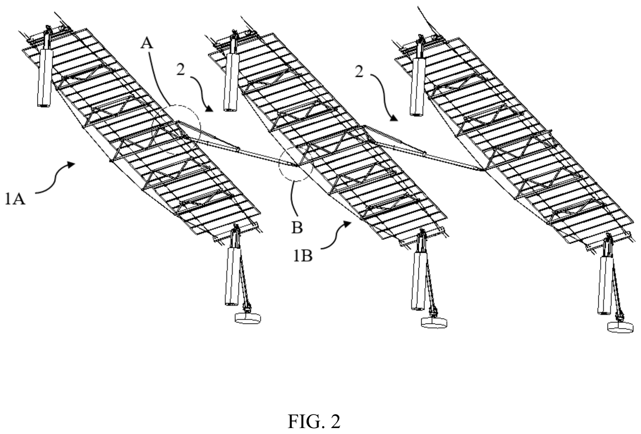

Referring to FIG. 2 to FIG. 8, a pivotal connection point of the first rod 211 with the first flexible photovoltaic support 1A, a pivotal connection point of one end of the damper 22 with the first flexible photovoltaic support 1A, and a pivotal connection point of the other end of the damper 22 with either the first rod 211 or the second rod 212 form three vertices of a triangle. This configuration enhances an overall structural stability of the wind resistance mechanism 2, thereby improving the wind resistance performance of adjacent rows of flexible photovoltaic supports 1 in high-wind conditions.

Specifically, the first rod 211 is pivotally connected to the cable structure 13 of the first support bracket 14A or the first flexible photovoltaic support 1A. The second rod 212 is pivotally connected to the cable structure 13 of the second support bracket 14B or the second flexible photovoltaic support 1B. One end of the damper 22 is pivotally connected to the cable structure 13 of the first support bracket 14A or the first flexible photovoltaic support 1A, while the other end of the damper 22 is pivotally connected to the first rod 211 or the second rod 212.

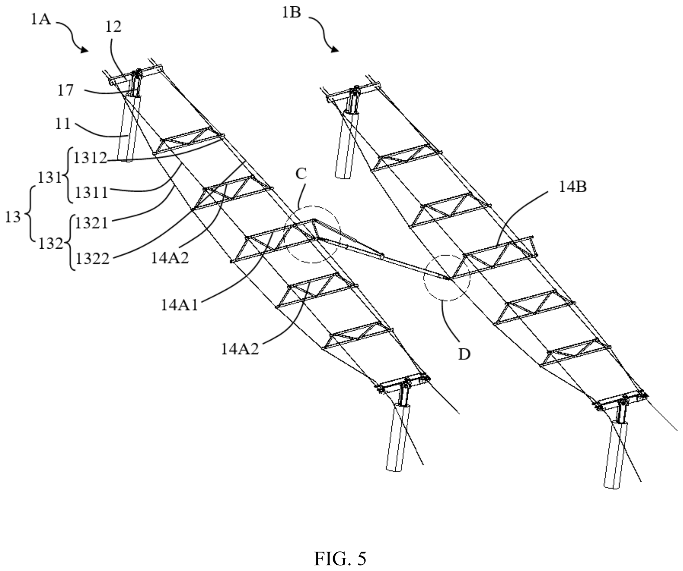

Referring to FIG. 5 to FIG. 8, the first rod 211 includes a first body 2111 and a first connecting component 2112. One end of the first connecting component 2112 is connected to the first body 2111, and the other end of the first connecting component 2112 is pivotally connected to the first support bracket 14A. The second rod 212 includes a second body 2121 and a second connecting component 2122. One end of the second connecting component 2122 is connected to the second body 2121, and the other end of the second connecting component 2122 is pivotally connected to the second support bracket 14B. Preferably, the second body 2121 is sleeved within the first body 2111 and is capable of telescopic movement inside the first body 2111. In other embodiments, one of the first body 2111 and the second body 2121 is a sliding groove, and a remaining one of the first body 2111 and the second body 2121 is a sliding block. The sliding groove and the sliding block cooperate with each other to allow relative movement between the first body 2111 and the second body 2121. Alternatively, the first body 2111 and the second body 2121 may have other structures that enable relative movement between them.

Referring to FIG. 5 to FIG. 8, the other end of the first connecting component 2112 is connected to the first support bracket 14A via a pin shaft, allowing the first body 2111 to pivot relative to the first support bracket 14A. The other end of the second connecting component 2122 is connected to the second support bracket 14B, enabling the second body 2121 to rotate relative to the second support bracket 14B. Preferably, the adjacent first support bracket 14A and second support bracket 14B correspond laterally and have the same structural dimensions. Two ends of the telescopic rod 21 are set at a same height, meaning they are connected to the first support bracket 14A and the second support bracket 14B at positions of equal height. Alternatively, two ends of the telescopic rod 21 may be arranged in an inclined manner, meaning they are connected to the first support bracket 14A and the second support bracket 14B at positions of different heights. By enabling rotational connections between the first connecting component 2112 and the first support bracket 14A, and between the second connecting component 2122 and the second support bracket 14B, the telescopic rod 21 is able to accommodate height differences between the first support bracket 14A and the second support bracket 14B, improving wind resistance while facilitating assembly. In other embodiments, the first connecting component 2112 is connected to the cable structure 13 in the same row as the first support bracket 14A, and the second connecting component 2122 is connected to the cable structure 13 in the same row as the second support bracket 14B.

Referring to FIG. 5, FIG. 8, and FIG. 10, the wind resistance mechanism 2 further includes a rotating seat 23 installed on the first body 2111. The damper 22 includes a damper body 221 and a damper telescopic rod 222 that extend and retract relative to each other. One end of the damper body 221 is rotationally connected to the rotating seat 23. One end of the damper telescopic rod 222 is rotationally connected to the first support bracket 14A. In this embodiment, the damper body 221 extends and retracts within the damper telescopic rod 222. Specifically, the rotating seat 23 includes two opposing support plates 231 and a first pivot shaft 232 connecting the two support plates 231. One end of the damper body 221 is mounted on the first pivot shaft 232 via a rod end bearing 24. The first support bracket 14A includes a plurality of support rods forming a polygon, with one of the support rods including two opposing fixing plates and a second pivot shaft 141 connecting the two fixing plates. One end of the damper telescopic rod 222 is mounted on the second pivot shaft 141 via a rod end bearing 24. In this embodiment, this support rod is the component cable support rod 142 described below. Thus, by incorporating the rod end bearings 24, universal connection is achieved. When the first support bracket 14A and the second support bracket 14B of the two rows of flexible photovoltaic supports 1 connected by the wind resistance mechanism 2 are vertically staggered or horizontally offset, the rod end bearings 24 allow the extension rod 21 and the damper 22 to adjust angles adaptively, preventing friction.

The cable structure 13 includes component cables 131 and stabilizing cables 132. The stabilizing cables 132 are located below the component cables 131. The component cables 131 are used for fixed connection with the photovoltaic modules 20. The component cables 131 include a first component cable 1311 and a second component cable 1312 which are arranged along a left-right direction. The stabilizing cables 132 include a first stabilizing cable 1321 and a second stabilizing cable 1322 which are arranged along the left-right direction. The first component cable 1311 and the first stabilizing cable 1321 are aligned vertically. The second component cable 1312 and the second stabilizing cable 1322 are aligned vertically. The first component cable 1311 and the first stabilizing cable 1321 together pass through one end of the beam 12, while the second component cable 1312 and the second stabilizing cable 1322 together pass through the other end of the beam 12. In this embodiment, the first connecting component 2112 is connected to the first stabilizing cable 1321 in the same row as the first flexible photovoltaic support 1A via a rod end bearing 24. The second connecting component 2122 is connected to the second stabilizing cable 1322 in the same row as the second flexible photovoltaic support 1B via a rod end bearing 24. The damper telescopic rod 222 is connected to the first component cable 1311 in the same row as the first flexible photovoltaic support 1A via a rod end bearing 24. This configuration also enhances the wind resistance performance of the first flexible photovoltaic support 1A and the second flexible photovoltaic support 1B.

Referring to FIG. 5 to FIG. 9, the structure of the first support bracket 14A and the second support bracket 14B is identical. The specific structure of the first support bracket 14A is described below. The first support bracket 14A includes a component cable support rod 142, a stabilizing cable support rod 143 arranged opposite to the component cable support rod 142, and a plurality of side support rods 144 connecting the component cable support rod 142 and the stabilizing cable support rod 143. Preferably, the side support rods 144 include a first side support rod 1441 and a second side support rod 1442. A length of the component cable support rod 142 is less than that of the stabilizing cable support rod 143. One end of the first side support rod 1441 and one end of the second side support rod 1442 are fixedly connected to two ends of the component cable support rod 142 via bolts, respectively. The other ends of the first side support rod 1441 and the second side support rod 1442 are fixedly connected to two ends of the stabilizing cable support rod 143 via bolts, respectively. Moreover, the first side support rod 1441 and the second side support rod 1442 extend outward in the left-right direction, respectively, so that the first support bracket 14A forms a trapezoidal structure. In other embodiments, the length of the component cable support rod 142 is greater than that of the stabilizing cable support rod 143. The first component cable 1311 and the second component cable 1312 are fixed at the first and second fixing points of the component cable support rod 142 by clamps 15. The first stabilizing cable 1321 and the second stabilizing cable 1322 are fixed at the third and fourth fixing points of the stabilizing cable support rod 143 by clamps 15. The first fixing point, the second fixing point, the third fixing point and the fourth fixing point form four corners of a trapezoid to enhance the wind resistance performance of the cable structure 13.

The side support rods 144 further include a third side support rod 1443 and a fourth side support rod 1444. The third side support rod 1443 and the fourth side support rod 1444 are respectively connected between the component cable support rod 142 and the stabilizing cable support rod 143. Moreover, the third side support rod 1443 and the fourth side support rod 1444 are located between the first side support rod 1441 and the second side support rod 1442. Preferably, one end of the third side support rod 1443 is fixedly connected to the component cable support rod 142 with bolts adjacent to a junction of the first side support rod 1441 and the component cable support rod 142. The other end of the third side support rod 1443 is fixedly connected with bolts to a center of the stabilizing cable support rod 143. The first side support rod 1441, the third side support rod 1443, and the stabilizing cable support rod 143 form a triangular structure. One end of the fourth side support rod 1444 is fixedly connected to the component cable support rod 142 with bolts adjacent to a junction of the second side support rod 1442 and the component cable support rod 142. The other end of the fourth side support rod 1444 is fixedly connected with bolts to a center of the stabilizing cable support rod 143. The second side support rod 1442, the fourth side support rod 1444, and the stabilizing cable support rod 143 form a triangular structure. This further enhances the overall stability of the first support bracket 14A, thereby improving the overall wind resistance performance of the cable structure 13.

Referring to FIG. 5, FIG. 6, FIG. 8 and FIG. 9, the component cable support rod 142 and the stabilizing cable support rod 143 are provided with reinforcing rods 16 adjacent to their ends. A triangle is formed between the reinforcing rod 16, the adjacent side support rod 144, and the component cable support rod 142 or the stabilizing cable support rod 143. In this embodiment, the reinforcing rod 16 is arranged on a side of the first support bracket 14A facing the telescopic rod 21 and the damper 22. Additionally, the reinforcing components of the first support bracket 14A and the second support bracket 14B are arranged facing each other. Specifically, the reinforcing rods 16 include a first reinforcing rod 161 and a second reinforcing rod 162. The first reinforcing rod 161 is integrally formed with the component cable support rod 142. The first reinforcing rod 161 extends laterally outward from an end of the component cable support rod 142, such that a free end of the first reinforcing rod 161 is vertically aligned with the stabilizing cable support rod 143. Two ends of the second reinforcing rod 162 are fixedly connected to an end of the first reinforcing rod 161 and an end of the stabilizing cable support rod 143, respectively, by bolts. In this way, a triangular structure is formed among the first reinforcing rod 161, the second reinforcing rod 162, and the stabilizing cable support rod 143, further enhancing the structural strength among the first support bracket 14A, the damper 22 and the telescopic rod 21, thereby improving wind resistance performance.

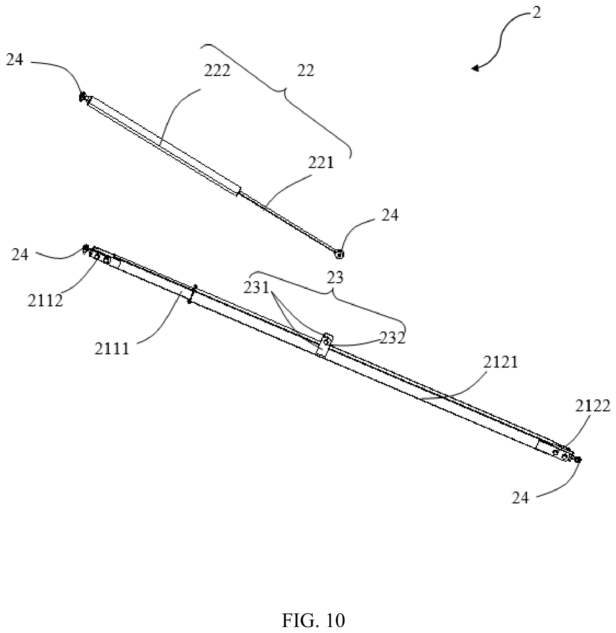

Referring to FIG. 10, in this embodiment, one end of the first rod 211 of the telescopic rod 21 is pivotally connected to the end of the stabilizing cable support rod 143 of the first support bracket 14A via a rod end bearing 24. One end of the second rod 212 is pivotally connected to the end of the stabilizing cable support rod 143 of the second support bracket 14B via a rod end bearing 24. One end of the damper 22 is pivotally connected to the end of the first reinforcing rod 161 or the second reinforcing rod 162 via a rod end bearing 24. This configuration allows the wind resistance mechanism 2 to provide resistance when the first flexible photovoltaic support 1A and the second flexible photovoltaic support 1B move relative to each other, reducing the swinging, tilting, or twisting of each row of flexible photovoltaic supports 1 and enhancing their wind resistance performance. When the flexible photovoltaic support array 10 includes a plurality of rows of flexible photovoltaic supports 1, the telescopic rod 21 and the damper 22 of the wind resistance mechanism 2 can adapt to their posture changes, meeting the real-time angle requirements of the flexible photovoltaic supports 1 with high versatility. Additionally, the damper 22 is able to provide damping for two adjacent rows of flexible photovoltaic supports 1, significantly improving their wind resistance performance, especially in high-wind conditions.

Referring to FIG. 5, the plurality of first support brackets 14A are arranged at intervals along an extending direction of the cable structure 13. The plurality of first support brackets 14A include a first central support bracket 14A1 located in a middle of the cable structure 13, and a plurality of first side support brackets 14A2 arranged on two sides of the first central support bracket 14A1 along the extending direction of the cable structure 13. The first central support bracket 14A1 connects with the first component cable 1311, the second component cable 1312, the first stabilizing cable 1321 and the second stabilizing cable 1322 to form a first set of four corner points. The first side support brackets 14A2 connect with the first component cable 1311, the second component cable 1312, the first stabilizing cable 1321 and the second stabilizing cable 1322 to form a second set of four corner points. A quadrilateral area formed by the first set of four corner points is larger than that formed by the second set of four corner points, causing the first stabilizing cable 1321 and the second stabilizing cable 1322 to assume a concave upward shape, thereby enhancing the wind resistance performance of the flexible photovoltaic support 1.

Referring to FIG. 1, FIG. 2 and FIG. 11, in a second embodiment, the flexible photovoltaic support array 10 is a flexible photovoltaic tracking support array. When the flexible photovoltaic support array 10 includes a plurality of rows of flexible tracking photovoltaic supports, the telescopic rod 21 and the damper 22 of the wind resistance mechanism 2 can adapt to its posture changes, meeting the requirements for real-time angle adjustments of the flexible photovoltaic tracking supports, thus offering high versatility. Moreover, the damper 22 provides damping between two adjacent rows of flexible photovoltaic supports 1, significantly enhancing their wind resistance, especially in high-wind conditions. During slow-speed telescopic movements, the damper 22 exerts no damping force, allowing for unimpeded tracking. During rapid telescopic movements, the damper 22 generates substantial damping force, which aids in resisting strong winds.

Each row of flexible photovoltaic supports 1 further includes a base 17 located at a top of each column 11, and a driving device 18 installed on the base 17. The beam 12 is rotatably mounted on the base 17. The driving device 18 is positioned between the beam 12 and the base 17, featuring a power output component connected to the beam 12. The driving device 18 is designed to rotate the beam 12, thereby enabling the cable structure 13 and the photovoltaic modules 20 attached to it to turn accordingly. By incorporating wind resistance mechanism 2 between adjacent rows of flexible photovoltaic tracking supports, the wind resistance mechanism 2 is able to provide resistance when the first and second rows of flexible photovoltaic supports move relative to each other, reducing sway, tilting, or twisting in each row and enhancing the wind resistance of the flexible photovoltaic tracking supports. When the flexible photovoltaic support array 10 includes a plurality of rows of flexible photovoltaic supports, the telescopic rod 21 and the damper 22 of the wind resistance mechanism 2 are able to adapt to their posture changes, meeting the real-time angle requirements of the flexible photovoltaic tracking supports with high versatility. Moreover, the damper 22 offers damping to adjacent rows, significantly improving wind resistance, especially in high-wind conditions.

In this embodiment, the first stabilizing cable 1321 and the second stabilizing cable 1322 of the cable structure 13 form an upwardly curved arc shape. When the component cable 131 rotates under the drive of the driving device 18, the prestress of the bottommost stabilizing cable (such as the first stabilizing cable 1321) can generate an upward supporting force. A moment formed by this supporting force around a center of gravity of the photovoltaic module 20 can overcome or counteract a moment caused by the center of gravity of the photovoltaic module 20 not being at a rotation center. If this moment is not overcome, it may lead to distortion of the photovoltaic module 20 after a period of use, causing the middle and the parts adjacent to the foundation structure of the photovoltaic module 20 to not lie in a same plane, thereby affecting power generation. The technical solution of the present patent application ensures that all photovoltaic modules 20 remain in a same plane. Meanwhile, the stabilizing cable on the other side (such as the second stabilizing cable 1322) can resist the force exerted by wind on a front of the module and provide upward support to overcome the gravity of the photovoltaic module 20, enhancing wind resistance performance.

The present invention further discloses a flexible photovoltaic system, which includes the flexible photovoltaic support array 10. The flexible photovoltaic system further includes the cable structures 13 installed on each row of flexible photovoltaic supports 1, and photovoltaic modules 20. The photovoltaic modules 20 are mounted on the cable structures 13 via clamping blocks 210. This arrangement ensures the stability of the photovoltaic modules 20, enhances their wind resistance, reduces the occurrence of swinging, flipping, or twisting of the photovoltaic modules 20 on the flexible photovoltaic supports 1, and lowers maintenance costs. The flexible photovoltaic supports 1 are either flexible photovoltaic tracking supports or flexible photovoltaic fixed supports.

In summary, the flexible photovoltaic support array 10 of the present invention includes at least two rows of flexible photovoltaic supports 1 and the wind resistance mechanism 2. The wind resistance mechanism 2 includes the telescopic rod 21 and the damper 22. The telescopic rod 21 includes the first rod 211 and the second rod 212 that slide in cooperation along the telescopic direction of the telescopic rod 21. The first rod 211 is pivotally connected to the first flexible photovoltaic support 1A. The second rod 212 is pivotally connected to the adjacent second flexible photovoltaic support 1B. One end of the damper 22 is connected to the first flexible photovoltaic support 1A, and the other end of the damper 22 is pivotally connected to either the first rod 211 or the second rod 212, enabling the wind resistance mechanism 2 to provide resistance when the first flexible photovoltaic support 1A and the second flexible photovoltaic support 1B move relative to each other, thereby reducing the swinging, tilting, or twisting of each row of flexible photovoltaic supports 1 and enhancing their wind resistance performance.

When the flexible photovoltaic support array 10 includes the plurality of rows of flexible photovoltaic tracking supports, the telescopic rod 21 and the damper 22 of the wind resistance mechanism 2 are able to adapt to their posture changes, meeting the real-time angle tracking requirements of the flexible photovoltaic tracking supports with high versatility. Moreover, the damper 22 provides damping for adjacent rows of flexible photovoltaic tracking supports, significantly enhancing their wind resistance, especially in high wind conditions.

The above embodiments are only used to illustrate the present invention and not to limit the technical solutions described in the present invention. The understanding of this specification should be based on those skilled in the art. Descriptions of directions, although they have been described in detail in the above-mentioned embodiments of the present invention, those skilled in the art should understand that modifications or equivalent substitutions can still be made to the application, and all technical solutions and improvements that do not depart from the spirit and scope of the application should be covered by the claims of the application.

## Claims

1. A flexible photovoltaic support array (10), comprising:
at least two rows of flexible photovoltaic supports (1), each row of the flexible photovoltaic support (1) comprising a plurality of columns (11) arranged at intervals, a plurality of beams (12) each disposed at a top of each of the columns (11), a plurality of cable structures (13) each connected between the beams (12) of two columns (11), and a support bracket (14) connected to the cable structure (13); wherein the at least two rows of the flexible photovoltaic supports (1) comprise a first flexible photovoltaic support (1A) and a second flexible photovoltaic support (1B) which are disposed adjacent to each other; the support bracket (14) comprises a first support bracket (14A) provided on the first flexible photovoltaic support (1A) and a second support bracket (14B) provided on the second flexible photovoltaic support (1B); and
a wind resistance mechanism (2), the wind resistance mechanism (2) comprising a telescopic rod (21) and a damper (22); wherein the telescopic rod (21) comprises a first rod (211) and a second rod (212) which are slidably fitted along a telescoping direction of the telescopic rod (21); the first rod (211) is pivotally connected to the first flexible photovoltaic support (1A); the second rod (212) is pivotally connected to the second flexible photovoltaic support (1B); one end of the damper (22) is pivotally connected to the first flexible photovoltaic support (1A), and another end of the damper (22) is pivotally connected to the first rod (211) or the second rod (212).

2. The flexible photovoltaic support array (10) according to claim 1, wherein a pivotal connection point of the first rod (211) to the first flexible photovoltaic support (1A), a pivotal connection point of the one end of the damper (22) to the first flexible photovoltaic support (1A), and a pivotal connection point of the another end of the damper (22) to the first rod (211) or the second rod (212) form three vertices of a triangle.

3. The flexible photovoltaic support array (10) according to claim 1, wherein the first rod (211) is pivotally connected to the first support bracket (14A) or the cable structure (13) of the first flexible photovoltaic support (1A); the second rod (212) is pivotally connected to the second support bracket (14B) or the cable structure (13) of the second flexible photovoltaic support (1B); the one end of the damper (22) is pivotally connected to the first support bracket (14A) or the cable structure (13) of the first flexible photovoltaic support (1A), and the another end of the damper (22) is pivotally connected to the first rod (211) or the second rod (212).

4. The flexible photovoltaic support array (10) according to claim 1, wherein the first rod (211) comprises a first body (2111) and a first connecting component (2112); one end of the first connecting component (2112) is connected to the first body (2111), and another end of the first connecting component (2112) is pivotally connected to the first support bracket (14A); and/or
the second rod (212) comprises a second body (2121) and a second connecting component (2122); one end of the second connecting component (2122) is connected to the second body (2121), and another end of the second connecting component (2122) is pivotally connected to the second support bracket (14B).

5. The flexible photovoltaic support array (10) according to claim 4, wherein the wind resistance mechanism (2) further comprises a rotating seat (23) disposed on the first body (2111) or the second body (2121); the damper (22) comprises a damper body (221) and a damper telescopic rod (222); one end of the damper body (221) is rotatably connected to the rotating seat (23), and one end of the damper telescopic rod (222) is rotatably connected to the first support bracket (14A).

6. The flexible photovoltaic support array (10) according to claim 5, wherein the rotating seat (23) comprises two support plates (231) provided on the first body (2111) or the second body (2121) that are oppositely arranged, and a first pivot shaft (232) connecting the two support plates (231); one end of the damper body (221) is mounted on the first pivot shaft (232) via a rod end bearing (24); and/or
the first support bracket (14A) comprises a support rod, the support rod comprises two fixing plates that are oppositely arranged, and a second pivot shaft (141) connecting the two fixing plates; and one end of the damper telescopic rod (222) is mounted on the second pivot shaft (141) via a rod end bearing (24).

7. The flexible photovoltaic support array (10) according to claim 1, wherein the first support bracket (14A) comprises a component cable support rod (142), a stabilizing cable support rod (143) arranged opposite to the component cable support rod (142), and a plurality of side support rods (144) connected between the component cable support rod (142) and the stabilizing cable support rod (143);
the cable structure (13) comprises component cables (131) and stabilizing cables (132); the stabilizing cables (132) are located below the component cables (131); the component cables (131) are used for fixedly connecting to photovoltaic modules (20); the component cables (131) comprise a first component cable (1311) and a second component cable (1312) which are arranged along a left-right direction; the stabilizing cables (132) comprise a first stabilizing cable (1321) and a second stabilizing cable (1322) which are arranged along the left-right direction; the first component cable (1311) and the second component cable (1312) are fixed by clamps (15) to a first fixing point and a second fixing point of the component cable support rod (142), respectively; the first stabilizing cable (1321) and the second stabilizing cable (1322) are fixed by clamps (15) to a third fixing point and a fourth fixing point of the stabilizing cable support rod (143), respectively; and the first fixing point, the second fixing point, the third fixing point and the fourth fixing point form four vertices of a trapezoid.

8. The flexible photovoltaic support array (10) according to claim 7, wherein a plurality of the first support brackets (14A) are provided and arranged at intervals along an extending direction of the cable structure (13); the plurality of first support brackets (14A) comprise a first central support bracket (14A1) located in a middle of the cable structure (13) and a plurality of first side support brackets (14A2) provided on two sides of the first central support bracket (14A1) along the extending direction of the cable structure (13); the first central support bracket (14A1) is connected to the first component cable (1311), the second component cable (1312), the first stabilizing cable (1321) and the second stabilizing cable (1322) to form a first set of four vertices; the first side support brackets (14A2) are connected to the first component cable (1311), the second component cable (1312), the first stabilizing cable (1321) and the second stabilizing cable (1322) to form a second set of four vertices; and an area of a quadrilateral formed by the first set of four vertices is larger than an area of a quadrilateral formed by the second set of four vertices.

9. The flexible photovoltaic support array (10) according to claim 7, wherein a reinforcing rod (16) is provided adjacent to ends of the component cable support rod (142) and the stabilizing cable support rod (143); and the reinforcing rod (16), the side support rod (144) adjacent to the reinforcing rod (16), and the component cable support rod (142) or the stabilizing cable support rod (143) form a triangle.

10. The flexible photovoltaic support array (10) according to claim 1, wherein each row of the flexible photovoltaic support (1) further comprises a base (17) disposed at the top of each of the columns (11), and a driving device (18) mounted on the base (17); the beam (12) is rotatably disposed on the base (17); the driving device (18) is disposed between the beam (12) and the base (17); the driving device (18) comprises a power output component; the power output component is connected to the beam (12); and the driving device (18) is used for driving the beam (12) to rotate, thereby being capable of driving the cable structure (13) and the photovoltaic modules (20) mounted on the cable structure (13) to rotate.

11. The flexible photovoltaic support array (10) according to claim 1, wherein the first support bracket (14A) and the second support bracket (14B) have a same structure.
